# EUROPEAN PATENT APPLICATION

(11) **EP 2 799 688 A1**
(43) Date of publication of application: **05.11.2014**
(21) Application number: 12862948.2
(22) Date of filing: 26.12.2012
(51) Int. Cl.: F02B 39/00

(54) **TURBOCHARGER**

(30) Priority: 28.12.2011 JP 2011290134
(71) Applicant: Mitsubishi Heavy Industries, Ltd., Tokyo 108-8215 (JP)
(72) Inventor: ITO, Yoshikazu, Tokyo 108-8215 (JP); SHIRAISHI, Keiichi, Tokyo 108-8215 (JP)
(74) Representative: Hoffmann Eitle
(86) International application number: PCT/JP2012/083666
(87) International publication number: WO 2013/099951

(57) **Abstract**

A turbocharger is provided in which it is not necessary to separately prepare an inner casing in accordance with a variable rate and it is possible to share the inner casing. In a turbocharger, a space that is formed between an inner casing and an outer casing is configured so as to become a first exhaust gas flow path (26) for leading exhaust gas discharged from an internal combustion engine to an outer periphery side of a turbine nozzle (25), a second exhaust gas flow path (36) for leading the exhaust gas branched in the middle of the first exhaust gas flow path (26) to an inner periphery side of the turbine nozzle (25) is formed on an inner periphery side of the inner casing, and a partition wall (37) which forms the inner casing and partitions the first exhaust gas flow path (26) and the second exhaust gas flow path (36) and a partition wall (42) which divides the turbine nozzle (25) into the outer periphery side and the inner periphery side are connected so as to be continuous through an adapter ring (45).

## Description

### Technical Field

The present invention relates to a turbocharger which is used in combination with a large-sized internal combustion engine such as a marine internal combustion engine or an internal combustion engine for power generation, for example.

### Background Art

As a turbocharger which is used in combination with a large-sized internal combustion engine such as a marine internal combustion engine or an internal combustion engine for power generation, a turbocharger is known in which a space which is formed between an inner casing and an outer casing is configured so as to become a first exhaust gas flow path for leading exhaust gas discharged from an internal combustion engine to the outer periphery side of a turbine nozzle and a second exhaust gas flow path for leading the exhaust gas branched in the middle of the first exhaust gas flow path to the inner periphery side of the turbine nozzle is formed on the inner periphery side of the inner casing (refer to PTL 1, for example). In this way, it is possible to change an inflow area of exhaust gas which flows into the turbine nozzle in two stages (to only the first exhaust gas flow path or both the first exhaust gas flow path and the second exhaust gas flow path) according to an engine load.

### Citation List

### Patent Literature

[PTL 1] Japanese Unexamined Patent Application Publication No. 2010-216468

### Summary of Invention

### Technical Problem

In the turbocharger disclosed in PTL 1, a variable rate is set to about 10%. That is, a partition wall 42 is provided at a position where the ratio between a throat area which is formed between an outer periphery-side member 25b and the partition wall 42 and a throat area which is formed between an inner periphery-side member 25a and the partition wall 42 is 9:1 (90%:10%).

However, as the variable rate of the turbocharger, a variable rate set to about 15% (or another variable rate) is sometimes required according to the operating conditions or the like of a ship. That is, a turbocharger provided with a turbine nozzle in which the partition wall 42 is provided at a position where the ratio between the throat area which is formed between the outer periphery-side member 25b and the partition wall 42 and the throat area which is formed between the inner periphery-side member 25a and the partition wall 42 is 8.5:1.5 (85%:15%) is sometimes required from a user.

Here, in order to change the variable rate of the turbocharger disclosed in PTL 1 from about 10% to about 15%, it is sufficient enough if a turbine nozzle in which the partition wall 42 is provided at a position where the ratio between the throat area which is formed between the outer periphery-side member 25b and the partition wall 42 and the throat area which is formed between the inner periphery-side member 25a and the partition wall 42 is 8.5:1.5 (85%:15%) and an inner casing in which a partition wall denoted by reference numeral 37 in Figs. 1 to 4 of PTL 1 is provided radially outside so as to match the partition wall of the turbine nozzle are prepared.

However, in this manner, if the inner casing is prepared in accordance with the variable rate of the turbocharger, it is necessary to prepare a mold for fabricating the inner casing in accordance with the variable rate, and thus there is a problem in that it is not economical.

The present invention has been made in view of the above-described circumstances and provides a turbocharger in which it is not necessary to separately prepare an inner casing in accordance with a variable rate and it is possible to share the inner casing.

### Solution to Problem

In order to solve the above-described problem, the present invention adopts the following means.

According to a first aspect of the present invention, there is provided an adapter ring of a turbocharger which compresses air for combustion of an internal combustion engine and forcibly feeds air having high density into a combustion chamber of the internal combustion engine and in which a space that is formed between an inner casing and an outer casing is configured so as to become a first exhaust gas flow path for leading exhaust gas discharged from the internal combustion engine to an outer periphery side of a turbine nozzle and a second exhaust gas flow path for leading the exhaust gas branched in the middle of the first exhaust gas flow path to an inner periphery side of the turbine nozzle is formed on an inner periphery side of the inner casing, and the adapter ring connecting a partition wall which forms the inner casing and partitions the first exhaust gas flow path and the second exhaust gas flow path and a partition wall which divides the turbine nozzle into the outer periphery side and the inner periphery side such that the partition walls are continuous.

According to a second aspect of the present invention, there is provided a turbocharger which compresses air for combustion of an internal combustion engine and forcibly feeds air having high density into a combustion chamber of the internal combustion engine, in which a space that is formed between an inner casing and an outer casing is configured so as to become a first exhaust gas flow path for leading exhaust gas discharged from the internal combustion engine to an outer periphery side of a turbine nozzle, a second exhaust gas flow path for leading the exhaust gas branched in the middle of the first exhaust gas flow path to an inner periphery side of the turbine nozzle is formed on an inner periphery side of the inner casing, and a partition wall which forms the inner casing and partitions the first exhaust gas flow path and the second exhaust gas flow path and a partition wall which divides the turbine nozzle into the outer periphery side and the inner periphery side are connected so as to be continuous through an adapter ring.

According to a third aspect of the present invention, there is provided a method of changing a variable rate of a turbocharger which compresses air for combustion of an internal combustion engine and forcibly feeds air having high density into a combustion chamber of the internal combustion engine and in which a space that is formed between an inner casing and an outer casing is configured so as to become a first exhaust gas flow path for leading exhaust gas discharged from the internal combustion engine to an outer periphery side of a turbine nozzle, a second exhaust gas flow path for leading the exhaust gas branched in the middle of the first exhaust gas flow path to an inner periphery side of the turbine nozzle is formed on an inner periphery side of the inner casing, and a partition wall which forms the inner casing and partitions the first exhaust gas flow path and the second exhaust gas flow path and a partition wall which divides the turbine nozzle into the outer periphery side and the inner periphery side are connected so as to be continuous through an adapter ring, the method including: dismounting the turbine nozzle and the adapter ring; and mounting a turbine nozzle having a different variable rate, and an adapter ring which connects a partition wall which divides the turbine nozzle into an outer periphery side and an inner periphery side and a partition wall which forms the inner casing and partitions the first exhaust gas flow path and the second exhaust gas flow path such that the partition walls are continuous.

According to the adapter ring, the turbocharger, and the method of changing a variable rate of the turbocharger related to the present invention, it is possible to easily and quickly change a variable rate of the turbocharger simply by dismounting the turbine nozzle and the mounted adapter ring and mounting a turbine nozzle having a different variable rate and an adapter ring prepared in advance in response to the turbine nozzle.

That is, it is not necessary to separately prepare an inner casing in response to the turbine nozzle having a different variable rate, and it is possible to share the inner casing.

### Advantageous Effects of Invention

According to the turbocharger related to the present invention, effects are exhibited in which it is not necessary to separately prepare an inner casing in accordance with a variable rate and it is possible to share the inner casing.

### Brief Description of Drawings

Fig. 1 is a cross-sectional view showing the turbine side of a turbocharger according to an embodiment of the present invention.
Fig. 2 is a bird's eye view of a portion of Fig. 1 in a dismantled state.
Fig. 3 is an enlarged main section view showing a main section of Fig. 1 in an enlarged manner.
Fig. 4 is a view in a state where a turbine nozzle is changed to a turbine nozzle having a different variable rate and a view similar to Fig. 3.

### Description of Embodiments

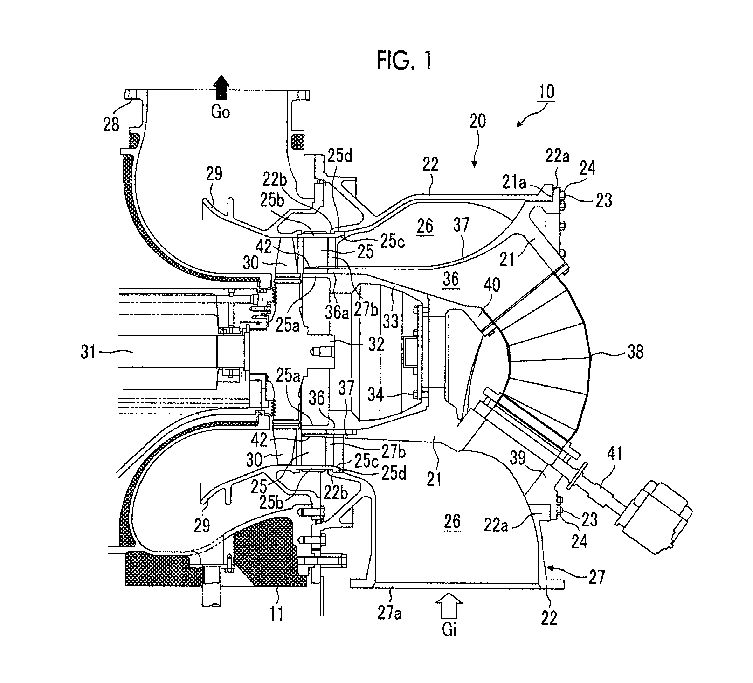

Hereinafter, an embodiment of an exhaust turbine supercharger according to the present invention will be described with reference to Figs. 1 to 4.

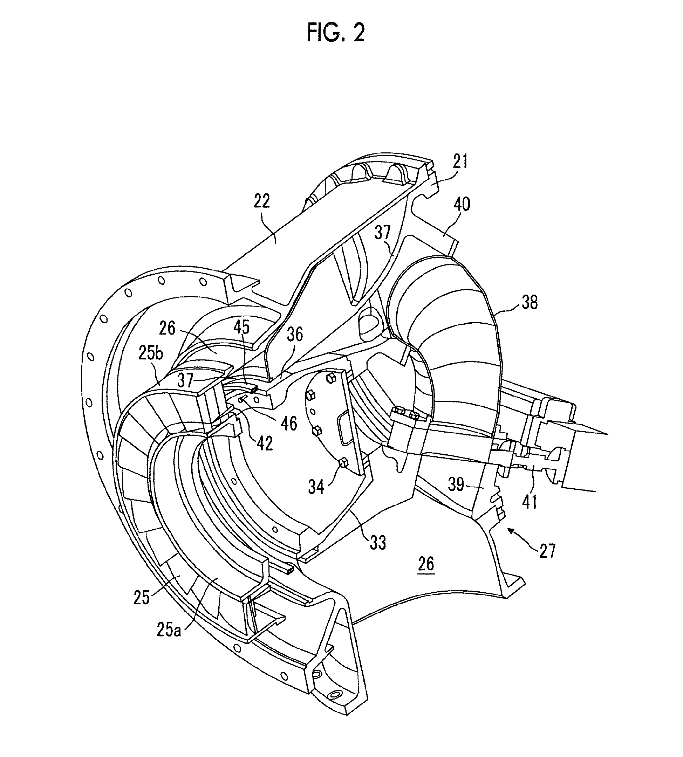

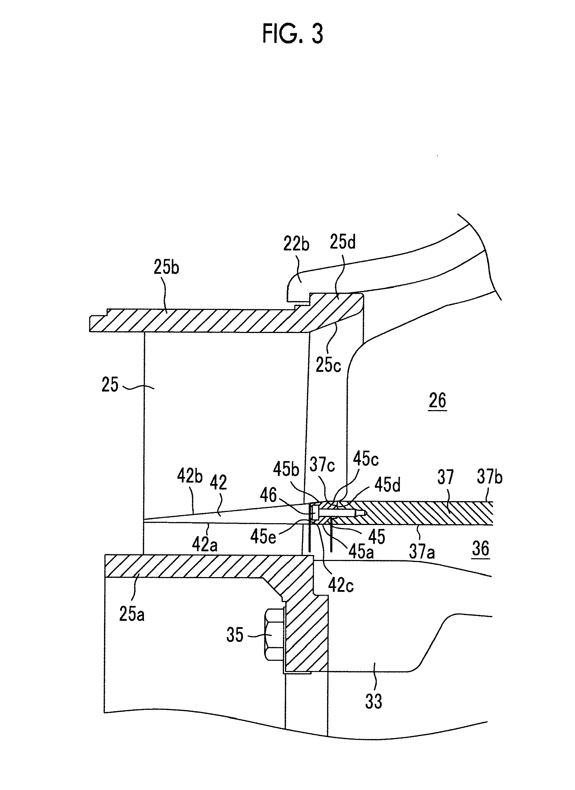

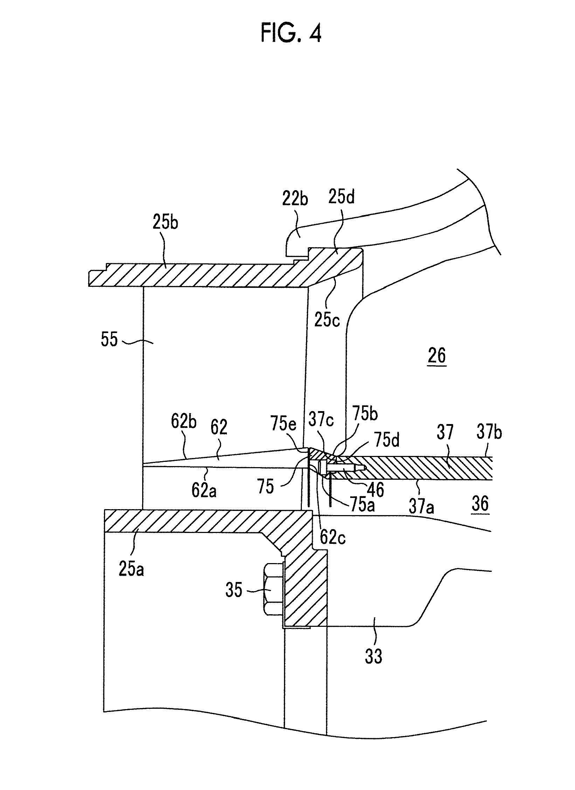

Fig. 1 is a cross-sectional view showing the turbine side of a turbocharger according to this embodiment, Fig. 2 is a bird's eye view of a portion of Fig. 1 in a dismantled state, Fig. 3 is an enlarged main section view showing a main section of Fig. 1 in an enlarged manner, and Fig. 4 is a view in a state where a turbine nozzle is changed to a turbine nozzle having a different variable rate and a view similar to Fig. 3.

As shown in Fig. 1, a turbocharger (also referred to as an "exhaust turbine supercharger") 10 is for compressing air for combustion of an internal combustion engine (not shown) and forcibly feeding air having high density into a combustion chamber (not shown) of the internal combustion engine. The turbocharger 10 is provided with a turbine blade 30 which is rotationally driven by exhaust gas which is discharged from the internal combustion engine, and a turbine nozzle 25 which leads the exhaust gas to the turbine blade 30.

The turbocharger 10 is, for example, an axial flow type turbine configured so as to rotate a compressor (not shown) disposed at the other end portion of a rotor shaft 31 by shaft output which is obtained by expansion of the exhaust gas of the internal combustion engine introduced into a turbine 20 and supply compressed air compressed to high density into the internal combustion engine.

In addition, a portion shown by grid-like hatching in Fig. 1 is a heat insulating material 11 installed for the purpose of heat insulation and sound insulation.

The turbine 20 is provided with a gas inlet casing 27 in which an inner casing 21 and an outer casing 22 which are separate bodies are integrated with each other by fastening means (for example, a stud bolt 23 and a nut 24) and a space which is formed between the inner casing 21 and the outer casing 22 is configured so as to become a (first) exhaust gas flow path (a main exhaust gas flow path) 26 for leading the exhaust gas to the turbine nozzle 25.

In the gas inlet casing 27 having such a double structure, the exhaust gas flow path 26 is formed over the entire circumference in a rotation direction of the turbine 20, and the exhaust gas introduced as indicated by an arrow Gi in Fig. 1 from a gas inlet 27a of the gas inlet casing 27 is led to a gas outlet 27b by way of the exhaust gas flow path 26 and then discharged from an outlet of a gas outlet casing 28 to the outside, as indicated by an arrow Go in Fig. 1. Further, the gas outlet 27b is provided to open so as to supply the exhaust gas to the turbine nozzle 25 over the entire circumference in the rotation direction.

In addition, reference numeral 29 in Fig. 1 denotes a gas guide tube provided on the downstream side of the turbine blade 30.

Further, the turbine 20 is provided with a rotor disk 32 provided at one end portion of the rotor shaft 31, and a large number of turbine blades 30 mounted along a circumferential direction on a peripheral edge portion of the rotor disk 32. The turbine blade 30 is provided close to the downstream side which is an outlet of the turbine nozzle 25. Then, the high-temperature exhaust gas which is ejected from the turbine nozzle 25 expands while passing through the turbine blade 30, whereby the rotor disk 32 and the rotor shaft 31 rotate.

In the gas inlet casing 27 having a double structure described above, one end portion of the inner casing 21 is fixed to one end portion of the outer casing 22 by the fastening means (for example, the stud bolt 23 and the nut 24). That is, the inner casing 21 is fixed and supported by creating a state where a flange surface 21a formed at a casing end portion on the right side of a plane of paper of the figure, which is the side opposite to the rotor disk 32, and a flange surface 22a of the outer casing 22 formed so as to face the flange surface 21a overlap, and tightening the fastening means (for example, the nut 24) in this state. Both the flange surfaces 21a and 22a are surfaces orthogonal to an axial direction of the rotor shaft 31 which rotates integrally with the rotor disk 32.

Further, the other end (an end portion on the rotor disk 32 side) inner peripheral portion (the other end portion inner peripheral portion) of the inner casing 21 has a structure in which a hollow cylindrical member 33 is joined (mounted) thereto through a bolt 34, and an inner periphery-side member 25a of a nozzle ring which is a ring-shaped member that forms the turbine nozzle 25 is joined to (mounted on) the end surface (the end surface on the rotor disk 32 side) of the member 33 through a bolt 35. The ring-shaped member which is generally called a nozzle ring and forms the turbine nozzle 25 has a double ring structure in which the inner periphery-side member 25a and an outer periphery-side member 25b having a predetermined gap therebetween are separated (partitioned) by a partition wall (a partition member) 42.

On the other hand, the outer periphery-side member 25b of the nozzle ring which forms the turbine nozzle 25 is expanded in diameter into a trumpet shape at an inner peripheral surface 25c of an end portion on the gas inlet side (the gas outlet 27b side). Further, a step portion 22b formed such that the inner peripheral surface of the outer casing 22 is bent in a direction of the rotor disk 32 is provided at an end portion on the rotor disk 32 side of the outer casing 22. Then, a configuration is made such that the step portion 22b and a step portion 25d provided at an end portion on the gas inlet side of the nozzle ring are engaged with (fitted to) each other in the axial direction.

In addition, the gas guide tube 29 is connected to an end portion on the gas outlet side (the turbine blade 30 side) of the outer periphery-side member 25b of the nozzle ring. A connection portion between the outer periphery-side member 25b of the nozzle ring and the gas guide tube 29 has a spigot joint structure in which each other's end portions are fitted to each other.

On the inner periphery side (the inside in a radial direction) of the inner casing 21, a (second) exhaust gas flow path (a secondary exhaust gas flow path) 36 which leads the exhaust gas branched in the middle of the exhaust gas flow path 26 to the inner periphery side (the inside in the radial direction) of the turbine nozzle 25 is formed over the entire circumference in the rotation direction of the turbine 20. The exhaust gas flow path 36 is provided on the inner periphery side (the inside in the radial direction) of the exhaust gas flow path 26, and the exhaust gas flow path 26 and the exhaust gas flow path 36 are partitioned by a partition wall 37 which forms the inner casing 21.

Further, a flange 39 for connecting an on-off valve (for example, a butterfly valve) 41 which is automatically opened and closed by a control device (not shown) with the inner casing and a flange 40 for connecting one end of a piping 38 with the inner casing are provided at an inner peripheral portion of one end (on the inner periphery side of one end portion) of the inner casing 21, and the other end of the piping 38 is connected to the on-off valve 41. Then, the exhaust gas branched in the middle of the exhaust gas flow path 26 is led to the exhaust gas flow path 36 by way of the flange 39, the on-off valve 41, the piping 38, and the flange 40.

The turbine nozzle 25 has, at the midway position thereof in the radial direction, the partition wall 42 which divides the turbine nozzle 25 into the inside in the radial direction and the outside in the radial direction. That is, the partition wall 42 in which an inner peripheral surface (a radially inner surface) 42a thereof forms the same plane as an inter peripheral surface (a radially inner surface) 37a of the partition wall 37 and which partitions the inner periphery side and the outer periphery side of the turbine nozzle 25 is provided on the root side of the turbine nozzle 25 (on the inner periphery-side member 25a side of the nozzle ring).

The inner peripheral surface 42a of the partition wall 42 forms the same plane as the inner peripheral surface (the radially inner surface) 37a of the partition wall 37 and is made so as to be approximately parallel to the rotor shaft 31 and the inner periphery-side member 25a of the nozzle ring.

Further, an outer peripheral surface (an outer periphery side) 42b of the partition wall 42 has a taped shape which is inclined to the inner periphery side of the turbine nozzle 25 toward the downstream side from the upstream side of the exhaust gas which is led from the exhaust gas flow path 26 to the turbine nozzle 25 on the outer periphery side (toward the left side from the right side in Fig. 3).

The outer peripheral surface 42b of the partition wall 42 which has a tapered shape toward the downstream side from the upstream side of the exhaust gas which is led to the turbine nozzle 25 on the outer periphery side has a taper angle of about 20°, for example.

An adapter ring 45 exhibiting a ring shape in a front view (in a plan view) is provided between the turbine nozzle 25 and the partition wall 37.

The adapter ring 45 is provided with an inner peripheral surface (a radially inner surface) 45a which connects the inner peripheral surface 42a of the partition wall 42 and the inner peripheral surface 37a of the partition wall 37 so as to be continuous and is formed so as to form the same plane as the inner peripheral surface 42a of the partition wall 42 and the inner peripheral surface 37a of the partition wall 37, a (first) outer peripheral surface (radially outer surface) 45b which connects the outer peripheral surface 42b of the partition wall 42 and an outer peripheral surface 37b of the partition wall 37 so as to be continuous and is formed so as to form the same plane as the outer peripheral surface 42b of the partition wall 42, and a (second) outer peripheral surface (radially outer surface) 45c formed so as to form the same plane as the outer peripheral surface 37b of the partition wall 37.

Further, the adapter ring 45 is joined (mounted) through a bolt 46 in a state where one end surface 45d which is located on the upstream side of the exhaust gas and an end surface 37c which is located on the downstream side of the exhaust gas of the partition wall 37 come into contact with each other.

In addition, the turbine nozzle 25 is joined through the bolt 35 in a state where an end surface 42c which is located on the upstream side of the exhaust gas of the partition wall 42 and the other end surface 45e which is located on the downstream side of the exhaust gas of the adapter ring 45 come into contact with each other.

Further, the partition wall 42 and the adapter ring 45 are provided at positions where the ratio between a throat area which is formed between the outer periphery-side member 25b and the partition wall 42 and a throat area which is formed between the inner periphery-side member 25a and the partition wall 42 is 9:1 (90%:10%).

Next, the flow of the exhaust gas in the turbocharger 10 configured in this manner will be described.

For example, in a case where the load of the internal combustion engine is low and the amount of exhaust gas is small, the on-off valve 41 enters a fully closed state, and in a case where the load of the internal combustion engine is high and the amount of exhaust gas is large, the on-off valve 41 enters a fully opened state.

That is, in a case where the load of the internal combustion engine is low and the amount of exhaust gas is small, the entire quantity of the exhaust gas introduced from the gas inlet 27a of the gas inlet casing 27 is led to the gas outlet 27b by way of the exhaust gas flow path 26. The exhaust gas led to the gas outlet 27b is led from the gas outlet 27b to the outer periphery side of the turbine nozzle 25 (into a space partitioned by the outer periphery-side member 25b and the partition wall 42).

Since the outer peripheral surface 42b of the partition wall 42 provided at the turbine nozzle 25 has a tapered shape inclined downward toward the downstream side from the upstream side of the exhaust gas which is led to the turbine nozzle 25, the exhaust gas led to the outer periphery side of the turbine nozzle 25 flows to the inner periphery side of the turbine nozzle 25 along the outer peripheral surface 42b of the partition wall 42 having the tapered shape. For this reason, the exhaust gas which is derived from the downstream side of the turbine nozzle 25 is led over the entirety of the turbine blade 30. The exhaust gas led to the entirety of the turbine blade 30 in this manner expands when passing through the turbine blade 30, thereby rotating the rotor disk 32 and the rotor shaft 31.

On the other hand, in a case where the load of the internal combustion engine is high and the amount of exhaust gas is large, most (about 70% to 95%) of the exhaust gas introduced from the gas inlet 27a of the gas inlet casing 27 is led to the gas outlet 27b by way of the exhaust gas flow path 26, and some (about 5% to 30%) of the exhaust gas introduced from the gas inlet 27a of the gas inlet casing 27 is led to a gas outlet 36a by way of the flange 39, the on-off valve 41, the piping 38, the flange 40, and the exhaust gas flow path 36.

The exhaust gas led to the gas outlet 27b is led from the gas outlet 27b which is opened over the entire circumference in the rotation direction to the outer periphery side of the turbine nozzle 25 (into the space partitioned by the outer periphery-side member 25b and the partition wall 42).

Since the outer peripheral surface 42b of the partition wall 42 provided in the turbine nozzle 25 has a tapered shape inclined downward toward the downstream side of the turbine nozzle 25, the exhaust gas led to the outer periphery side of the turbine nozzle 25 flows along the outer peripheral surface 42b of the partition wall 42 having the tapered shape. For this reason, the exhaust gas which is derived from the downstream side of the turbine nozzle 25 is led over the entirety of the turbine blade 30. The exhaust gas led to the entirety of the turbine blade 30 in this manner expands when passing through the turbine blade 30, thereby rotating the rotor disk 32 and the rotor shaft 31.

On the other hand, the exhaust gas led to the gas outlet 36a is led from the gas outlet 36a which is opened over the entire circumference in the rotation direction to the inner periphery side of the turbine nozzle 25 (into a space partitioned by the inner periphery-side member 25a and the partition wall 42). The exhaust gas led to the inner periphery side of the turbine nozzle 25 flows along the inner peripheral surface 42a of the partition wall 42 provided in the turbine nozzle 25. For this reason, the exhaust gas which is derived from the downstream side of the turbine nozzle 25 is led to the inner periphery side of the turbine blade 30. The exhaust gas led to the inner periphery side of the turbine blade 30 in this manner expands when passing through the turbine blade 30, thereby rotating the rotor disk 32 and the rotor shaft 31.

In this manner, the exhaust gas expands when passing through the turbine blade 30, thereby rotating the rotor disk 32 and the rotor shaft 31, whereby the compressor provided at the other end portion of the rotor shaft 31 is driven, and thus air which is supplied to the internal combustion engine is compressed.

In addition, air which is compressed by the compressor is sucked through a filter (not shown), and the exhaust gas expanded at the turbine blade 30 is led to the gas outlet guide tube 29 and the gas outlet casing 28 and flows to the outside.

Further, the on-off valve 41 enters a fully closed state, for example, in a case where the pressure of air which is sent out (discharged) from the compressor or the pressure of air which is supplied into the combustion chamber of the internal combustion engine is lower than 0.2 MPa (2 bar) at an absolute pressure, that is a case where the internal combustion engine performs a low load operation, and enters a fully opened state in a case where the pressure of air which is sent out (discharged) from the compressor or the pressure of air which is supplied into the combustion chamber of the internal combustion engine is higher than or equal to 0.2 MPa (2 bar) at an absolute pressure, that is a case where the internal combustion engine performs a high load operation.

Then, in the turbocharger 10 according to this embodiment, it is possible to replace the turbine nozzle 25 with a turbine nozzle 55 shown in Fig. 4 and replace the adapter ring 45 with an adapter ring 75 shown in Fig. 4.

The turbine nozzle 55 has, at the midway position thereof in the radial direction, a partition wall 62 which divides the turbine nozzle 55 into the inside in the radial direction and the outside in the radial direction. That is, the partition wall 62 which partitions the inner periphery side and the outer periphery side of the turbine nozzle 55 is provided on the root side of the turbine nozzle 55 (on the inner periphery-side member 25a side of the nozzle ring).

An inner peripheral surface 62a of the partition wall 62 is located further outside in the radial direction than the inner peripheral surface (the radially inner surface) 37a of the partition wall 37, forms a surface parallel to the inner peripheral surface 37a of the partition wall 37, and is made approximately parallel to the rotor shaft 31 and the inner periphery-side member 25a of the nozzle ring.

Further, an outer peripheral surface (an outer periphery side) 62b of the partition wall 62 has a tapered shape which is inclined to the inner periphery side of the turbine nozzle 55 toward the downstream side from the upstream side of the exhaust gas which is led from the exhaust gas flow path 26 to the turbine nozzle 55 on the outer periphery side (toward the left side from the right side in Fig. 4).

The outer peripheral surface 62b of the partition wall 62 which has a tapered shape toward the downstream side from the upstream side of the exhaust gas which is led to the turbine nozzle 55 on the outer periphery side has a taper angle of about 20°, for example.

The adapter ring 75 is provided with an inner peripheral surface (a radially inner surface) 75a which connects the inner peripheral surface 62a of the partition wall 62 and the inner peripheral surface 37a of the partition wall 37 so as to be continuous and has a tapered shape which is inclined to the outer periphery side of the turbine nozzle 55 toward the downstream side from the upstream side of the exhaust gas which is led from the exhaust gas flow path 36 to the turbine nozzle 55 on the inner periphery side (toward the left side from the right side in Fig. 4), and an outer peripheral surface (a radially outer surface) 75b which connects the outer peripheral surface 62b of the partition wall 62 and the outer peripheral surface 37b of the partition wall 37 so as to be continuous and has a tapered shape which is inclined to the outer periphery side of the turbine nozzle 55 toward the downstream side from the upstream side of the exhaust gas which is led from the exhaust gas flow path 26 to the turbine nozzle 55 on the outer periphery side (toward the left side from the right side in Fig. 4).

Further, the adapter ring 75 is joined (mounted) through the bolt 46 in a state where one end surface 75d which is located on the upstream side of the exhaust gas and the end surface 37c which is located on the downstream side of the exhaust gas of the partition wall 37 come into contact with each other. In addition, the turbine nozzle 55 is joined through the bolt 35 in a state where an end surface 62c which is located on the upstream side of the exhaust gas of the partition wall 62 and the other end surface 75e which is located on the downstream side of the exhaust gas of the adapter ring 75 come into contact with each other. Further, the partition wall 62 and the adapter ring 75 are provided at positions where the ratio between a throat area which is formed between the outer periphery-side member 25b and the partition wall 62 and a throat area which is formed between the inner periphery-side member 25a and the partition wall 62 is 8.5:1.5 (85%:15%).

In addition, in Fig. 4, the same members as those in Fig. 3 are denoted by the same reference numerals as those in Fig. 3 and description of these members is omitted here.

Further, since the flow of the exhaust gas in the turbocharger provided with the turbine nozzle 55 and the adapter ring 75 is also the same as that in the turbocharger 10 provided with the turbine nozzle 25 and the adapter ring 45, description thereof is omitted here.

According to the adapter rings 45 and 75, the turbocharger 10, and a method of changing a variable rate of the turbocharger 10 related to this embodiment, it is possible to easily and quickly change the variable rate of the turbocharger 10 simply by dismounting the turbine nozzle 25 and the mounted adapter ring 45 and mounting the turbine nozzle 55 having a different variable rate and the adapter ring 75 prepared in advance in response to the turbine nozzle 55.

That is, it is not necessary to separately prepare the inner casing 21 in response to the turbine nozzle 55 having a different variable rate, and it is possible to share the inner casing 21.

In addition, the present invention is not limited to the embodiment described above, and it is possible to appropriately modify and implement or change and implement the present invention within a scope which does not depart from the technical idea of the present invention, as necessary.

For example, in the embodiment described above, the variable rate being set to about 10% and about 15% has been described by being taken as a specific example. However, the present invention is not limited thereto and the variable rate can be appropriately selected as necessary.

Further, in the embodiment described above, the procedure of dismounting the turbine nozzle 25 and the mounted adapter ring 45 and replacing them with the turbine nozzle 55 having a different variable rate and the adapter ring 75 prepared in advance in response to the turbine nozzle 55 has been described. However, the present invention is not limited thereto, and in a case where the turbine nozzle 55 and the adapter ring 75 are mounted in advance, the turbine nozzle 55 and the adapter ring 75 may be dismounted and replaced with the turbine nozzle 25 having a different variable rate and the adapter ring 45 prepared in advance in response to the turbine nozzle 25.

Further, in the embodiment described above, the taper angle of the outer peripheral surface 42b of the partition wall 42 has been described as being about 20°. However, the present invention is not limited thereto, and if it is an angle at which the exhaust gas which is led from the downstream side of the turbine nozzle 25 to the turbine blade 30 is led to the entirety of the turbine blade 30, any angle is acceptable.

In addition, in the embodiment described above, the outer peripheral surface 42b of the partition wall 42 of the nozzle ring has been described as having a tapered shape which is gradually inclined downward toward the downstream side from the upstream side of the turbine nozzle 25. However, even a shape to lead an exhaust gas flow to the inner periphery side of the turbine nozzle 25 toward the downstream side when the on-off valve 41 is closed, for example, a conical surface shape or a curved surface shape is also acceptable if it is a shape in which the exhaust gas passed through the turbine nozzle 25 is led to the root side of the turbine blade 30.

In addition, in the embodiment described above, a configuration in which the turbine nozzle 25 and the adapter ring 45, and the turbine nozzle 55 and the adapter ring 75 are respectively fabricated as separate bodies has been described by being taken as a specific example. However, the turbine nozzle 25 and the adapter ring 45, and the turbine nozzle 55 and the adapter ring 75 may be respectively fabricated as integrated bodies.

In addition, in the embodiment described above, description has been made using the axial flow turbine. However, the present invention can also be applied to a rotary machine such as a centrifugal/diagonal flow turbine or a power turbine.

### Reference Signs List

- 10:: TURBOCHARGER
- 21:: INNER CASING
- 22:: OUTER CASING
- 25:: TURBINE NOZZLE
- 26:: (FIRST) EXHAUST GAS FLOW PATH
- 36:: (SECOND) EXHAUST GAS FLOW PATH
- 37:: PARTITION WALL
- 42:: PARTITION WALL
- 45:: ADAPTER RING
- 55:: TURBINE NOZZLE
- 62:: PARTITION WALL
- 75:: ADAPTER RING

## Claims

1. An adapter ring of a turbocharger which compresses air for combustion of an internal combustion engine and forcibly feeds air having high density into a combustion chamber of the internal combustion engine and
in which a space that is formed between an inner casing and an outer casing is configured so as to become a first exhaust gas flow path for leading exhaust gas discharged from the internal combustion engine to an outer periphery side of a turbine nozzle and
a second exhaust gas flow path for leading the exhaust gas branched in the middle of the first exhaust gas flow path to an inner periphery side of the turbine nozzle is formed on an inner periphery side of the inner casing,
the adapter ring connecting a partition wall which forms the inner casing and partitions the first exhaust gas flow path and the second exhaust gas flow path and a partition wall which divides the turbine nozzle into the outer periphery side and the inner periphery side such that the partition walls are continuous.

2. A turbocharger which compresses air for combustion of an internal combustion engine and forcibly feeds air having high density into a combustion chamber of the internal combustion engine,
wherein a space which is formed between an inner casing and an outer casing is configured so as to become a first exhaust gas flow path for leading exhaust gas discharged from the internal combustion engine to an outer periphery side of a turbine nozzle,
a second exhaust gas flow path for leading the exhaust gas branched in the middle of the first exhaust gas flow path to an inner periphery side of the turbine nozzle is formed on an inner periphery side of the inner casing, and
a partition wall which forms the inner casing and partitions the first exhaust gas flow path and the second exhaust gas flow path and a partition wall which divides the turbine nozzle into the outer periphery side and the inner periphery side are connected so as to be continuous through an adapter ring.

3. A method of changing a variable rate of a turbocharger which compresses air for combustion of an internal combustion engine and forcibly feeds air having high density into a combustion chamber of the internal combustion engine and
in which a space that is formed between an inner casing and an outer casing is configured so as to become a first exhaust gas flow path for leading exhaust gas discharged from the internal combustion engine to an outer periphery side of a turbine nozzle,
a second exhaust gas flow path for leading the exhaust gas branched in the middle of the first exhaust gas flow path to an inner periphery side of the turbine nozzle is formed on an inner periphery side of the inner casing, and
a partition wall which forms the inner casing and partitions the first exhaust gas flow path and the second exhaust gas flow path and a partition wall which divides the turbine nozzle into the outer periphery side and the inner periphery side are connected so as to be continuous through an adapter ring,
the method comprising:
dismounting the turbine nozzle and the adapter ring; and
mounting a turbine nozzle having a different variable rate, and an adapter ring which connects a partition wall which divides the turbine nozzle into an outer periphery side and an inner periphery side and a partition wall which forms the inner casing and partitions the first exhaust gas flow path and the second exhaust gas flow path such that the partition walls are continuous.
